# EUROPEAN PATENT APPLICATION

(11) **EP 4 801 073 A1**
(43) Date of publication of application: **02.09.2026**
(21) Application number: 24896304.3
(22) Date of filing: 15.11.2024
(51) Int. Cl.: H04W 4/12

(54) **COMMUNICATION METHOD AND APPARATUS**

(30) Priority: 01.12.2023 CN 202311663306
(71) Applicant: Huawei Technologies Co., Ltd., Shenzhen, Guangdong 518129 (CN)
(72) Inventor: ZHANG, Chenyu, Shenzhen, Guangdong 518129 (CN); XU, Shengfeng, Shenzhen, Guangdong 518129 (CN)
(74) Representative: Gill Jennings & Every LLP
(86) International application number: PCT/CN2024/132482
(87) International publication number: WO 2025/113213

(57) **Abstract**

This application provides a communication method and apparatus, relating to the field of communication technologies. A first terminal receives, from a second terminal, a first message used to discover a communication target; and sends a response message of the first message to the second terminal if a communication link exists between the first terminal and the communication target. In this application, if the first terminal determines that the communication link exists between the first terminal and the communication target, the first terminal does not broadcast, to other terminals, a message used to discover the communication target, and directly sends the response message to the second terminal, to avoid a waste of signaling resources caused by sending an unnecessary broadcast message used to discover the communication target.

## Description

### CROSS-REFERENCE TO RELATED APPLICATIONS

This application claims priority to Chinese Patent Application No. 202311663306.0, filed with the China National Intellectual Property Administration on December 1, 2023 and entitled "COMMUNICATION METHOD AND APPARATUS", which is incorporated herein by reference in its entirety.

### TECHNICAL FIELD

Embodiments of this application relate to the field of communication technologies, and in particular, to a communication method and apparatus.

### BACKGROUND

Proximity service (proximity service, ProSe) communication allows direct communication between user equipments (user equipment, UE). It can also enable two UEs that cannot establish a direct link to indirectly establish a communication link via one or more intermediate UEs (acting as relays), which forward communication data for the two UEs.

When a ProSe UE (Source (source) UE) is to discover another ProSe UE (Target (target) UE) via a relay to perform communication corresponding to a relay service code (relay service code, RSC), the source UE sends a discovery message to surrounding UEs in a broadcast manner to indicate that the source UE is to discover the target UE. After receiving the discovery message indicating that the source UE is to discover the target UE, a relay UE (Relay) adds identity information of the relay UE to the discovery message, and then sends the discovery message to the target UE in a broadcast manner. After receiving the discovery message from a relay, the target UE sends a response message to the corresponding relay in a unicast manner. After receiving the response message, the relay sends the response message to the source UE in a unicast manner. The source UE can learn of, based on the response message, the relay linked to the target UE. The discovery message is sent in the broadcast manner. In this case, if the target UE has been discovered on a path (including one or more UEs), but the discovery message is still broadcast on another path, a waste of signaling resources is caused, and a processing delay of a discovery process is increased.

### SUMMARY

This application provides a communication method and apparatus, to avoid a waste of signaling resources caused by sending a discovery message a plurality of times.

According to a first aspect, this application provides a communication method, applied to a first terminal. The first terminal may be a device like a mobile phone, a vehicle-mounted device, or an internet of things device, or may be understood as a chip disposed inside the first terminal. In addition, the first terminal may be used as a relay terminal, a relay node, or the like, which is referred to as a relay for short. This is not specifically limited in this application. The following is performed.

A first message used to discover a communication target is received from a second terminal; and a response message of the first message is sent to the second terminal if a communication link exists between the first terminal and the communication target.

The communication target may be a target terminal or a network, and may be determined based on an actual communication requirement of the second terminal. This is not specifically limited in this application. That the communication link exists between the first terminal and the communication target may be understood as that the first terminal has established a communication link to the communication target. Based on the communication link, the first terminal may determine a transmission path to the communication target, and may directly send a response message to the second terminal. The response message may indicate that discovery of the communication target is determined. For example, the communication target is a third terminal, a direct communication link exists between the first terminal and the third terminal, and a transmission path from the second terminal to the third terminal is: Second terminal-First terminal-Third terminal. Alternatively, the communication target is a third terminal, an indirect communication link exist between the first terminal and the third terminal (that is, one or more terminals are used as relays between the first terminal and the third terminal, and an example in which the relay is an X^{th} terminal is used), and a transmission path from the second terminal to the third terminal is: Second terminal-First terminal-X^{th} terminal-Third terminal. Alternatively, the communication target is a network, and a communication link exists between the first terminal and the network. It may be understood as that the first terminal has accessed the network. In this case, the second terminal may access the network by using the first terminal as a relay. It may alternatively be understood as that a communication link exists between the first terminal and an X^{th} terminal that has accessed the network. In this case, the second terminal may access the network by using the first terminal and the X^{th} terminal as relays. Examples are merely provided for description, and no specific limitation is imposed.

In this application, after receiving a discovery message for the communication target from the second terminal, if the first terminal determines that the communication link exists between the first terminal and the communication target, the first terminal directly sends the response message to the second terminal, and does not need to continue to send a discovery message for the communication target. In this manner, communication signaling can be reduced, and signaling resources can be saved.

In an optional implementation, the first terminal further determines, based on link information of the first terminal and the first message, that the communication link exists between the first terminal and the communication target.

In this application, the link information of the first terminal usually indicates related information of a terminal that has a communication link to the first terminal (for example, information such as identification information of the terminal, and a relay service code corresponding to the communication link between the first terminal and the terminal). The first terminal may obtain related information of the communication target based on the first message, and the first terminal performs matching between the related information of the communication target and the related information of the terminal that has the communication link to the first terminal, to determine whether the communication link exists between the first terminal and the communication target.

In an optional implementation, the first message includes identification information of the communication target and a first relay service code; and the link information includes identification information of at least one terminal that has a communication link to the first terminal, and a relay service code corresponding to the communication link between the first terminal and the at least one terminal.

The identification information of the communication target may indicate an identity of the communication target. For example, the identification information of the communication target may be indicated by the following identifiers: a subscription concealed identifier (subscription concealed identifier, SUCI), a subscription permanent identifier (subscription permanent identifier, SUPI), a fifth generation-globally unique temporary identity (5G-globally unique temporary identity, 5G-GUTI), a temporary mobile subscriber identity (temporary mobile subscriber identity, TMSI), a 5G-system-temporary mobile subscriber identity (5G-s-temporary mobile subscriber identity, 5G-S-TMSI), a generic public subscription identifier (generic public subscription identifier, GPSI), a user information ID (User Info ID), and the like. The first relay service code is a relay service code corresponding to a communication link between the second terminal and the communication target. The identification information that is in the link information and that is of the at least one terminal that has the communication link to the first terminal may alternatively be indicated by the foregoing identifiers. This is not specifically limited in this application. For example, if the identification information of the communication target is indicated by the User Info ID, an identifier that is in the link information and that is of the at least one terminal may also be indicated by the User Info ID. Certainly, the identifier that is in the link information and that is of the at least one terminal may alternatively be indicated by another identifier. This is not specifically limited herein.

In an optional implementation, that the first terminal determines, based on the link information of the first terminal and the first message, that the communication link exists between the first terminal and the communication target includes:
determining, if the at least one terminal includes an associated terminal of the communication target, and a relay service code corresponding to a communication link between the first terminal and the associated terminal of the communication target includes the first relay service code, that the communication link exists between the first terminal and the communication target.

In this application, to determine that the communication link exists between the first terminal and the communication target, determining based on the link information and the first message is added, to avoid broadcasting a discovery message for the communication target. In this manner, communication signaling can be reduced, and signaling resources can be saved.

In an optional implementation, if no communication link exists between the first terminal and the communication target, a second message used to discover the communication target is sent, where the second message includes identification information of the first terminal.

In actual application, if no communication link exists between the first terminal and the communication target, the first terminal needs to send a message used to discover the communication target to another terminal, to directly discover the communication target or discover the communication target via the another terminal.

In an optional implementation, if the following first condition is met, it is determined that no communication link exists between the first terminal and the communication target, where the first condition includes at least one of the following: the at least one terminal that has the communication link to the first terminal does not include the associated terminal of the communication target; or the relay service code corresponding to the communication link between the first terminal and the at least one terminal does not include the first relay service code.

In this application, the first terminal sends the message used to discover the communication target to the another terminal only when determining that the first condition is met, instead of directly sending the message to the another terminal without performing any data processing. In this manner, a waste of signaling resources can be reduced.

In an optional implementation, before the first terminal sends the second message used to discover the communication target, the method further includes:
determining that a number of transmission hops between the second terminal and the first terminal is less than a number of transmission hops that is stored in the first terminal and that is of a third message between the first terminal and the second terminal, where the third message is used by the second terminal to discover the communication target.

The third message is a discovery message transmitted in a historical time period by the second terminal for discovering the communication target. If the current number of transmission hops between the first terminal and the second terminal is less than the number of transmission hops of the third message between the first terminal and the second terminal, it is considered that there may be fewer terminals between the second terminal and the communication target. Therefore, the first terminal sends the second message used to discover the communication target, to help determine an optimal path for establishing the communication link between the second terminal and the communication target.

In an optional implementation, before the first terminal sends the response message of the first message to the second terminal, the method further includes:
determining that signal quality between the first terminal and the associated terminal of the communication target is greater than a signal quality threshold; and/or determining that a number of transmission hops between the first terminal and the associated terminal of the communication target is less than a hop count threshold.

In this application, before sending the response message of the discovery message for the communication target to the second terminal, the first terminal determines that the signal quality between the first terminal and the associated terminal of the communication target is greater than the signal quality threshold, so that the second terminal can establish the communication link to the communication target. In addition, it is determined that the number of transmission hops between the first terminal and the associated terminal of the communication target is less than the hop count threshold, to ensure that the communication link established between the second terminal and the communication target meets a requirement of the second terminal.

In an optional implementation, the first message includes the hop count threshold.

In an optional implementation, the link information further includes: hop count information of a communication link between the first terminal and an associated terminal of the communication target; and that the first terminal determines, based on the link information of the first terminal and the first message, that the communication link exists between the first terminal and the communication target includes:
determining, if the at least one terminal includes the associated terminal of the communication target, a relay service code corresponding to the communication link between the first terminal and the associated terminal of the communication target includes the first relay service code, and a number of transmission hops corresponding to the hop count information of the communication link between the first terminal and the associated terminal of the communication target is less than a hop count threshold, that the communication link exists between the first terminal and the communication target.

In this application, to determine that the communication link exists between the first terminal and the communication target, determining based on the link information and the first message is added. In this manner, communication signaling can be reduced, and signaling resources can be saved. In addition, when the link information includes the hop count information of the communication link between the first terminal and the associated terminal of the communication target, determining based on the hop count information and the hop count threshold is added, to reduce occurrence of a broadcast storm (to be specific, one terminal receives, a plurality of times, discovery messages that are of a same terminal for a same communication target and that are sent by a plurality of terminals, or one terminal sends, a plurality of times, discovery messages that are of a same terminal for a same communication target).

In an optional implementation, the first terminal further determines, based on the hop count information, the number of transmission hops corresponding to the hop count information.

In an optional implementation, the hop count information includes at least one of the following: the number of transmission hops between the first terminal and the associated terminal of the communication target; or identification information of each hop between the first terminal and the associated terminal of the communication target.

In an optional implementation, the first terminal further stores information about the communication target, where the information about the communication target includes the identification information of the communication target.

In an optional implementation, the information about the communication target further includes at least one of the following: identification information of the second terminal, hop count information of the communication link between the first terminal and the associated terminal of the communication target, and the first relay service code.

In an optional implementation, the first terminal further stores information about each hop between the second terminal and the first terminal, where the information about each hop includes at least one of the following: identification information of each hop, a number of transmission hops between each hop and the first terminal, or a relay service code corresponding to a communication link between each hop and the first terminal.

In an optional implementation, when the communication target is a target terminal, the associated terminal of the communication target is the target terminal (which may be understood as that the associated terminal of the communication target may be replaced with the target terminal herein); or when the communication target is a target network, the associated terminal of the communication target is a terminal that has a communication link to the target network.

According to a second aspect, an embodiment of this application provides a communication apparatus. The communication apparatus may be a terminal (for example, the first terminal in the first aspect or a chip disposed in the first terminal). The communication apparatus has functions of implementing the foregoing first aspect. For example, the communication apparatus includes corresponding modules, units, or means (means) for performing the steps in the first aspect. The functions, units, or means may be implemented by software, or may be implemented by hardware, or may be implemented by hardware executing corresponding software.

In a possible design, the communication apparatus includes a processing unit and a transceiver unit. The transceiver unit may be configured to receive/send a signal, to implement communication between the communication apparatus and another apparatus. For example, the transceiver unit is configured to receive a first message. The processing unit may be configured to perform some internal operations of the communication apparatus. The transceiver unit may be referred to as an input/output unit, a communication unit, or the like, and the transceiver unit may be a transceiver. The processing unit may be a processor. When the communication apparatus is a module (for example, a chip) in a communication device, the transceiver unit may be an input/output interface, an input/output circuit, an input/output pin, or the like, and may also be referred to as an interface, a communication interface, an interface circuit, or the like; and the processing unit may be a processor, a processing circuit, a logic circuit, or the like.

In another possible design, the communication apparatus includes a processor, and may further include a transceiver. The transceiver is configured to receive/send a signal, and the processor executes program instructions, to complete the method in any one of the possible designs or implementations of the first aspect. The communication apparatus may further include one or more memories. The memory is configured to be coupled to the processor, and the memory may store a necessary computer program or necessary instructions for implementing the functions in the first aspect. The processor may execute the computer program or the instructions stored in the memory. When the computer program or the instructions are executed, the communication apparatus is caused to implement the method according to any one of the possible designs or implementations of the first aspect.

In another possible design, the communication apparatus includes a processor. The processor may be configured to be coupled to a memory. The memory may store a necessary computer program or necessary instructions for implementing the functions in the first aspect. The processor may execute the computer program or the instructions stored in the memory. When the computer program or the instructions are executed, the communication apparatus is caused to implement the method according to any one of the possible designs or implementations of the first aspect.

In another possible design, the communication apparatus includes a processor and an interface circuit. The processor is configured to: communicate with another apparatus through the interface circuit, and perform the method according to any one of the possible designs or implementations of the first aspect.

It may be understood that in the second aspect, the processor may be implemented by hardware or may be implemented by software. When implemented by hardware, the processor may be a logic circuit, an integrated circuit, or the like. When implemented by software, the processor may be a general-purpose processor, and is implemented by reading software code stored in the memory. In addition, there may be one or more processors and there may be one or more memories. The memory and the processor may be integrated together, or the memory and the processor may be separately disposed. In a specific implementation process, the memory and the processor may be integrated on a same chip, or may be separately disposed on different chips. A type of the memory and a manner of disposing the memory and the processor are not limited in embodiments of this application.

According to a third aspect, an embodiment of this application provides a communication system. The communication system includes the first terminal, the second terminal, and the communication target in the first aspect.

According to a fourth aspect, this application provides a chip system. The chip system includes a processor and may further include a memory, and is configured to implement the method in any one of the possible designs of the first aspect to the third aspect. The chip system may include a chip, or may include a chip and another discrete component.

According to a fifth aspect, this application further provides a computer-readable storage medium. The computer-readable storage medium stores computer-readable instructions. When the computer-readable instructions are run on a computer, the computer is caused to perform the method in any one of the possible designs of the first aspect to the fourth aspect.

According to a sixth aspect, this application provides a computer program product including instructions. When the computer program product runs on a computer, the computer is caused to perform the method in various embodiments of the first aspect to the fifth aspect.

For technical effects that can be achieved in the second aspect to the sixth aspect, refer to the descriptions of the technical effects that can be achieved in the corresponding possible design solutions in the first aspect. Details are not described again in this application.

### BRIEF DESCRIPTION OF DRAWINGS

FIG. 1a to FIG. 1e are diagrams of communication systems according to an embodiment of this application;
FIG. 2 is a schematic flowchart of relay communication;
FIG. 3 is a diagram of communication between terminals;
FIG. 4 is a schematic flowchart of a communication method according to an embodiment of this application;
FIG. 5a and FIG. 5b are a schematic flowchart of a communication method according to an embodiment of this application;
FIG. 6a and FIG. 6b are a schematic flowchart of a communication method according to an embodiment of this application;
FIG. 7 is a diagram of a structure of a communication apparatus according to an embodiment of this application;
FIG. 8 is a diagram of a structure of a communication apparatus according to an embodiment of this application; and
FIG. 9 is a diagram of a structure of a communication apparatus according to an embodiment of this application.

### DESCRIPTION OF EMBODIMENTS

To make the objectives, technical solutions, and advantages of this application clearer, the following further describes this application in detail with reference to the accompanying drawings. A specific operation method in a method embodiment may also be applied to an apparatus embodiment or a system embodiment. In the descriptions of this application, unless otherwise specified, "a plurality of" means two or more. Therefore, for implementations of the apparatus and the method, reference may be made to each other, and repeated parts are not described again.

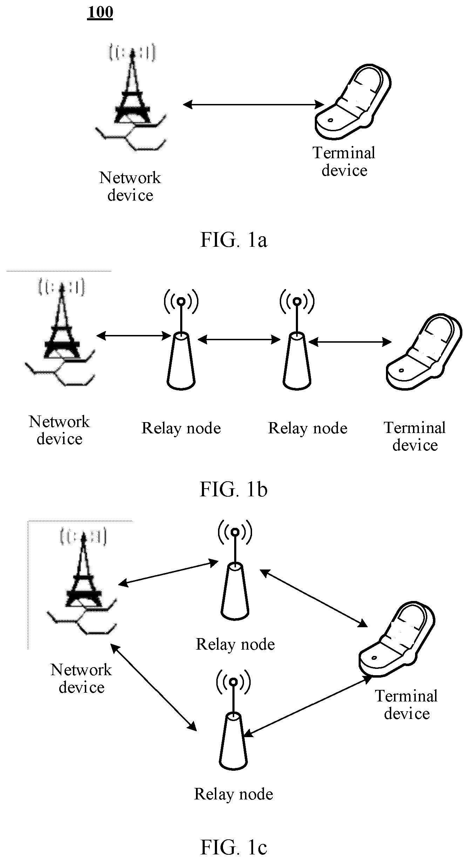

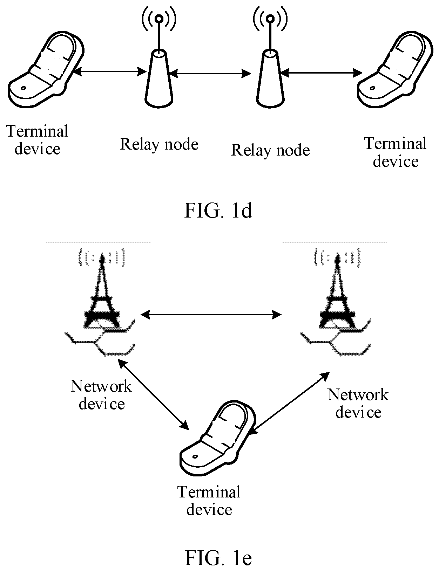

FIG. 1a to FIG. 1e show communication systems 100 applicable to this application. In FIG. 1a, the communication system 100 includes a network device and a terminal device. Sending data by the network device to the terminal device may be understood as downlink data transmission, and sending data by the terminal device to the network device may be understood as uplink data transmission. In FIG. 1b, the communication system 100 is a multi-hop single-link system, and includes a network device, a terminal device, and relay nodes. Data transmission may be performed between the network device and the terminal device via a plurality of relay nodes. In FIG. 1c, the communication system 100 is a multi-hop multi-link system. Data transmission may be performed between a network device and a terminal device via a plurality of relay nodes. In FIG. 1d, the communication system 100 includes relay nodes and terminal devices. A terminal device may transmit data to another terminal device via a plurality of relay nodes, to implement point-to-point communication between the terminal devices. In addition, a terminal device may further establish, via a relay node, a link to another terminal device that has accessed a network device, which is similar to FIG. 1b, to implement communication between the terminal device and the network device. The relay nodes in FIG. 1b, FIG. 1c, and FIG. 1d may be single-hop (single-hop) or multi-hop (multi-hop) nodes. The relay node may be a small cell, an integrated access and backhaul (integrated access and backhaul, IAB) node, a distributed unit (distributed unit, DU), a terminal device, a transmitter and receiver point (transmitter and receiver point, TRP), or the like. Details are not described in this application. FIG. 1e shows a dual-connectivity (dual-connectivity, DC) communication system. DC is an important technology introduced in 3GPP Release 12. With the dual connectivity technology, LTE macro and small cells may use existing non-ideal backhaul (non-ideal backhaul) X2 interfaces to implement carrier aggregation, to provide higher rates for users, and improve spectral efficiency and balance load through macro/micro networking. A terminal device supporting dual connectivity may be simultaneously linked to two LTE base stations, to increase a throughput of a single user. In a 5G network deployment process, a 5G cell may be used as a wide area standalone, or may be used as a small cell to implement coverage and capacity enhancement of an existing LTE network. Regardless of which networking manner is used, the dual connectivity technology can be used to implement interconnection between an LTE system and a 5G system, to improve radio resource utilization of an entire mobile network system, reduce a communication system switching delay, and improve user and system performance.

The network device is an apparatus that is deployed in a radio access network to provide a wireless communication function for a terminal device. The network device is a device that has a wireless transceiver function or a chip that may be disposed in the device. The device includes but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission and reception point, TRP or transmission point, TP), or the like. The device may alternatively be a gNB or a transmission point (TRP or TP) in a 5G (for example, NR) system, or one antenna panel or one group (including a plurality of antenna panels) of antenna panels of a base station in a 5G system. The device may alternatively be a network node, for example, a baseband unit (BBU), a distributed unit (distributed unit, DU), or a satellite that constitutes a gNB or a transmission point.

In some deployments, a gNB may include a central unit (central unit, CU) and a DU. The gNB may further include a radio unit (radio unit, RU). The CU implements some functions of the gNB, and the DU implements some functions of the gNB. For example, the CU implements functions of a radio resource control (radio resource control, RRC) layer and a packet data convergence protocol (packet data convergence protocol, PDCP) layer, and the DU implements functions of a radio link control (radio link control, RLC) layer, a media access control (media access control, MAC) layer, and a physical (physical, PHY) layer. Information at the RRC layer finally becomes information at the PHY layer (that is, the information is sent through the PHY layer) or is transformed from information at the PHY layer. Therefore, in such an architecture, it may be considered that higher layer signaling like RRC layer signaling or PDCP layer signaling is sent by the DU or sent by the DU and the RU. It may be understood that the access network device may be a CU node, a DU node, or a device including a CU node and a DU node. In addition, the CU may be classified as a communication apparatus in an access network RAN, or the CU may be classified as a communication apparatus in a core network CN. This is not limited.

The terminal device in embodiments of this application may also be referred to as a terminal, and is an entity, on a user side, for receiving or transmitting a signal, and is configured to send an uplink signal to a network device, or receive a downlink signal from the network device. The terminal device includes a device that provides a user with voice and/or data connectivity, for example, may include a handheld device with a wireless connection function, or a processing device connected to a wireless modem. The terminal device may communicate with a core network through a radio access network (radio access network, RAN), and exchange voice and/or data with the RAN. The terminal device may include a user equipment (user equipment, UE), a V2X terminal device, a wireless terminal device, a mobile terminal device, a device-to-device (device-to-device, D2D) communication terminal device, a machine-to-machine/machine-type communication (machine-to-machine/machine-type communication, M2M/MTC) terminal device, an internet of things (internet of things, IoT) terminal device, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), a wearable device, a vehicle-mounted device, or the like.

By way of example, and not limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, such as various smart bands, smart helmets, or smart jewelry for monitoring physical signs.

If the various terminal devices described above are located in a vehicle (for example, placed in the vehicle or installed in the vehicle), the terminal devices may be all considered as in-vehicle terminal devices. For example, the in-vehicle terminal devices are also referred to as on-board units (on-board unit, OBU).

In the descriptions of embodiments of this application, the term "and/or" describes an association relationship of associated objects, and indicates that three relationships may exist. For example, A and/or B may indicate the following three cases: Only A exists, both A and B exist, and only B exists. The character "/" generally indicates an "or" relationship between the associated objects. In this application, "at least one" means one or more, and "a plurality of" means two or more. In addition, it should be understood that in the descriptions of this application, terms such as "first" and "second" are merely used for distinguishing and description, but should not be understood as indicating or implying relative importance, or should not be understood as indicating or implying a sequence.

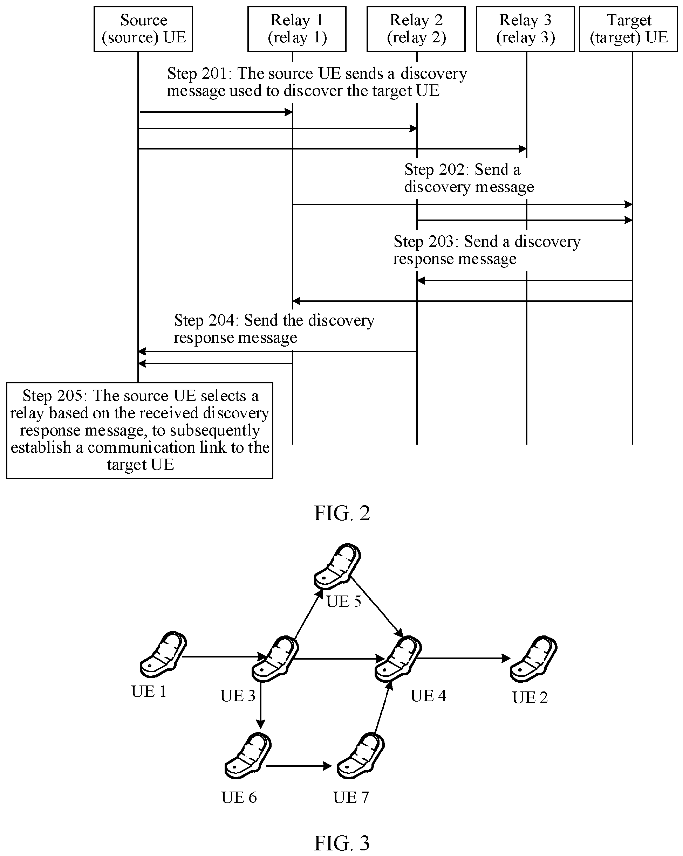

Communication between the terminal devices in FIG. 1d may be implemented via the relay nodes, and the relay nodes may be terminal devices. The communication between the terminal devices may be understood with reference to FIG. 2. The following uses an example in which a source UE discovers a target UE via a relay 1, a relay 2, and a relay 3 for description. In a 5G system, an identity of a UE may be identified by using a user information ID, receiving and sending addresses of a message may be identified by using Layer 2 IDs, and a relay service type is identified by using an RSC. The following is performed.

Step 201: The source UE sends a discovery message used to discover the target UE, where the discovery message includes a discovery type (a type of the discovery message, for example, a terminal-to-terminal relay discovery message, which may be specifically understood with reference to an existing protocol standard, and is not described herein), a user information ID of the source UE, an RSC, and a user information ID of the target UE. A layer 2 identifier of the source UE is used as a source Layer 2 ID (namely, an address of the source UE), and a broadcast Layer 2 ID is used as a destination Layer 2 ID.

Step 202: Relays that receive the discovery message in step 201 choose, based on a condition like signal quality, to send discovery messages, where the message includes the discovery type, the user information ID of the source UE, the RSC, the user information ID of the target UE, and a user information ID of the relay.

In FIG. 2, it is assumed that the relay 3 receives the discovery message but has poor signal quality, and therefore, the relay 3 does not send a discovery message; and the relay 1 and the relay 2 also receive the discovery message and have good signal quality, and therefore, the relay 1 and the relay 2 send discovery messages.

Step 203: After receiving a discovery message sent by one or more relays in step 202, the target UE may choose, based on a condition like signal quality, to send a discovery response message to one or more of the one or more relays, where the message includes the discovery type, the user information ID of the source UE, the RSC, the user information ID of the target UE, and a user information ID of a corresponding relay.

In FIG. 2, the target UE receives the discovery messages from the relay 1 and the relay 2 with good signal quality. In this case, the target UE sends discovery responses to the relay 1 and the relay 2 respectively.

Step 204: The relays that receive the discovery response messages in step 203 send the discovery response messages to the source UE, where the message includes the discovery type, the user information ID of the source UE, the RSC, the user information ID of the target UE, and the user information ID of the corresponding relay.

Step 205: The source UE selects a relay based on the received discovery response message, to subsequently establish a communication link to the target UE.

As shown in FIG. 2, the source UE may establish the communication link to the target UE via the relay 1, or may establish the communication link to the target UE via the relay 2. A specific manner of establishing the communication link to the target UE may be determined based on requirements of the source UE. The foregoing uses only three relay nodes as an example for description. However, in actual application, a plurality of relay nodes may exist between the source UE and the target UE. As shown in FIG. 3, a UE 1 (Source UE) may establish a link to a UE 2 (Target UE) through a path 1 (UE 1-UE 3-UE 4-UE 2). However, the UE 3 and the UE 4 may further broadcast a UE 2 discovery message of the UE 1 to other UEs. For example, the UE 3 may further send the discovery message to a UE 5 and a UE 6. The UE 5 may send a discovery message to the UE 4, the UE 6 may send a discovery message to a UE 7 and the UE 4, and the UE 7 may send a discovery message to the UE 4. In this case, the UE 4 may receive discovery messages from the UE 3, the UE 5, the UE 6, and the UE 7. Although the UE 2 has been discovered through the path 1, there are still a large number of broadcast discovery messages, causing a waste of a large number of signaling resources, and increasing a discovery delay of the UE 2. In addition, a same UE may receive, a plurality of times, discovery messages that are sent by different UEs and that are of the source UE for the target UE, or send discovery messages of the source UE for the target UE a plurality of times. This may cause broadcast message redundancy and a broadcast storm.

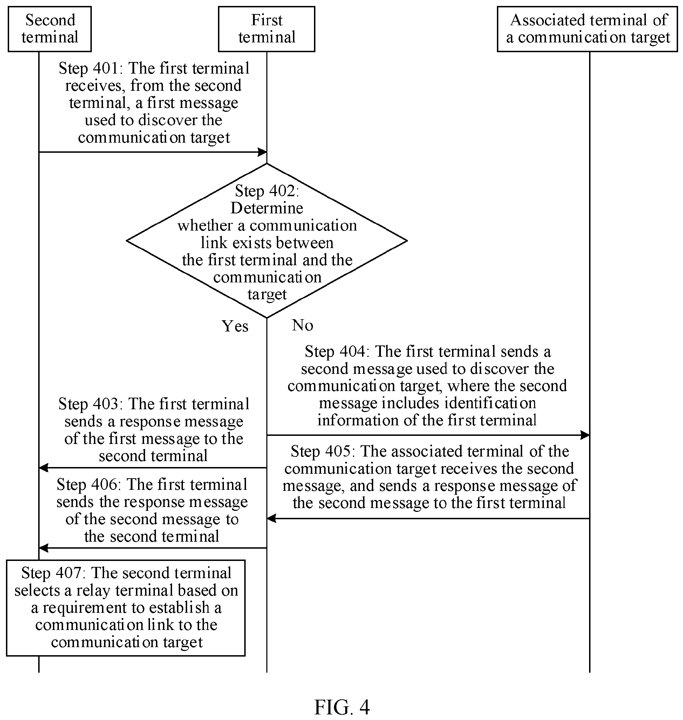

Based on this, this application provides a communication method, to reduce signaling resources consumed when a communication link is established between terminal devices via a relay node. Refer to FIG. 4. A first terminal, a second terminal, and an associated terminal of a communication target may be used as examples for description. The first terminal may be a relay terminal (namely, a relay node), which is referred to as a relay for short below. The second terminal is a source UE. The communication target may be a target UE, or may be a target network. When the communication target is a target terminal, the associated terminal of the communication target is the target terminal (which may be understood as that the associated terminal of the communication target may be replaced with the target terminal herein); or when the communication target is a target network, the associated terminal of the communication target is a terminal that has a communication link to the target network. This is not specifically limited in this application, and the following is performed.

Step 401: The first terminal receives, from the second terminal, a first message used to discover the communication target.

In actual application, instead of sending the first message to the first terminal through point-to-point communication, the second terminal broadcasts the first message, and the broadcast message happens to be received by the first terminal. Certainly, the broadcast message may be received by another terminal, and the first terminal is merely used as an example for description. For data processing logic of the another terminal, refer to the first terminal for understanding, and details are not described herein.

The first message includes identification information of the communication target and a first relay service code. The identification information of the communication target may indicate an identity of the communication target (for example, the user information ID of the target UE in FIG. 2). The identification information of the communication target may alternatively be indicated by the following identifiers: an SUCI, an SUPI, a 5G-GUTI, a TMSI, a 5G-S-TMSI, a GPSI, a User Info ID, and the like. The first relay service code (namely, the RSC in FIG. 2) is a relay service code corresponding to a communication link between the second terminal and the communication target. For example, when the second terminal is a vehicle terminal device, the first relay service code may be a parking-related relay service code. When the second terminal is a hotel robot, the first relay service code may be a catering-related relay service code. Examples are merely provided herein for description. The relay service code is not specifically limited.

Step 402: Determine whether a communication link exists between the first terminal and the communication target; and if the communication link exists between the first terminal and the communication target, perform step 403, or if no communication link exists between the first terminal and the communication target, perform step 404.

Specifically, after obtaining the first message, the first terminal may determine, based on historical communication between the first terminal and the communication target, whether the communication link to the communication target exists. For example, if the first terminal exchanges data with the communication target a plurality of times in a past week (namely, in a historical time period), it is considered that the communication link exists between the first terminal and the communication target. The historical time period is selected based on a user requirement, and may be flexibly set based on an actual requirement, for example, set to one week, one month, or one year. This is not specifically limited herein. The first terminal may further request, from a core network device, information about a link to the communication target. If the core network device feeds back, to the first terminal, that a communication link can be established to the communication target, it is determined that the communication link exists between the first terminal and the communication target. The core network device may be a network exposure function (network exposure function, NEF), an access and mobility management function (access and mobility management function, AMF), a session management function (session management function, SMF), or the like. This is not specifically limited herein. The first terminal may further determine, based on link information of the first terminal and the first message, whether the communication link exists between the first terminal and the communication target. The link information of the first terminal usually indicates related information of a terminal that has a communication link to the first terminal (for example, information such as identification information of at least one terminal that has a communication link to the first terminal, and a relay service code corresponding to the communication link between the first terminal and the at least one terminal). The first terminal may obtain related information of the communication target based on the first message, and the first terminal performs matching between the related information of the communication target and the related information of the terminal that has the communication link to the first terminal, to determine whether the communication link exists between the first terminal and the communication target. In addition, the link information may further indicate, through a link mark, a status of the communication link between the first terminal and the communication target. If the link mark exists, it indicates that the communication link exists between the first terminal and the communication target; or if the link mark does not exist, it indicates that no communication link exists between the first terminal and the communication target.

The link information includes the identification information of the at least one terminal that has the communication link to the first terminal, and the relay service code corresponding to the communication link between the first terminal and the at least one terminal. If the at least one terminal includes the associated terminal of the communication target, and a relay service code corresponding to a communication link between the first terminal and the associated terminal of the communication target includes the first relay service code, it is determined that the communication link exists between the first terminal and the communication target. In addition, if the following first condition is met, it is determined that no communication link exists between the first terminal and the communication target, where the first condition includes at least one of the following: the at least one terminal that has the communication link to the first terminal does not include the associated terminal of the communication target; or the relay service code corresponding to the communication link between the first terminal and the at least one terminal does not include the first relay service code.

For example, the communication target of the second terminal is a UE 3, the first relay service code is an RSC 1, and the link information of the first terminal includes: the UE 3, a UE 4, and a UE 5. A relay service code corresponding to a communication link between the first terminal and the UE 3 is an RSC 2, a relay service code corresponding to a communication link between the first terminal and the UE 4 is an RSC 3, and a relay service code corresponding to a communication link between the first terminal and the UE 5 is an RSC 4. Although the link information of the first terminal includes the UE 3, the relay service code corresponding to the communication link between the first terminal and the UE 3 does not include the RSC 1. Therefore, no communication link exists between the first terminal and the UE 3. Alternatively, the communication target of the second terminal is a UE 3, the first relay service code is an RSC 1, and the link information of the first terminal includes: the UE 3, a UE 4, and a UE 5. Relay service codes corresponding to a communication link between the first terminal and the UE 3 are an RSC 2 and the RSC 1, a relay service code corresponding to a communication link between the first terminal and the UE 4 is an RSC 3, and a relay service code corresponding to a communication link between the first terminal and the UE 5 is an RSC 4. In this case, the link information of the first terminal includes the UE 3, and the relay service codes corresponding to the communication link between the first terminal and the UE 3 includes the RSC 1. Therefore, the communication link exists between the first terminal and the UE 3. Alternatively, the communication target of the second terminal is a UE 3, the first relay service code is an RSC 1, and the link information of the first terminal includes: a UE 4 and a UE 5. In this case, the link information of the first terminal does not include the UE 3. Therefore, no communication link exists between the first terminal and the UE 3.

In this application, to determine that the communication link exists between the first terminal and the communication target, determining based on the link information and the first message is added, to avoid broadcasting a discovery message for the communication target. In this manner, communication signaling can be reduced, and signaling resources can be saved. The identification information that is in the link information and that is of the at least one terminal that has the communication link to the first terminal may alternatively be indicated by the foregoing identifiers such as an SUCI, an SUPI, a 5G-GUTI, a TMSI, a 5G-S-TMSI, and a GPSI. This is not specifically limited in this application. For example, if the identification information of the communication target is indicated by the SUCI, an identifier that is in the link information and that is of the at least one terminal may also be indicated by the SUCI. Certainly, the identifier that is in the link information and that is of the at least one terminal may alternatively be indicated by another identifier. This is not specifically limited herein.

That the communication link exists between the first terminal and the communication target may be understood as that the first terminal has established a communication link to the communication target. Based on the communication link, the first terminal may determine that a transmission path to the communication target is discovered, and may directly send a response message to the second terminal. The response message may indicate that discovery of the communication target is determined. For example, the communication target is a third terminal, a direct communication link exists between the first terminal and the third terminal, and a transmission path from the second terminal to the third terminal is: Second terminal-First terminal-Third terminal. Alternatively, the communication target is a third terminal, an indirect communication link exist between the first terminal and the third terminal (that is, one or more terminals are used as relays between the first terminal and the third terminal, and an example in which the relay is an X^{th} terminal is used), and a transmission path from the second terminal to the third terminal is: Second terminal-First terminal-X^{th} terminal-Third terminal. Alternatively, the communication target is a target network, and a communication link exists between the first terminal and the target network. It may be understood as that the first terminal has accessed the target network. In this case, the second terminal may access the target network by using the first terminal as a relay. It may alternatively be understood as that a communication link exists between the first terminal and an X^{th} terminal that has accessed the target network. In this case, the second terminal may access the target network by using the first terminal and the X^{th} terminal as relays. Examples are merely provided for description, and no specific limitation is imposed.

In an optional embodiment, the link information further includes: hop count information of the communication link between the first terminal and the associated terminal of the communication target. If the at least one terminal includes the associated terminal of the communication target, the relay service code corresponding to the communication link between the first terminal and the associated terminal of the communication target includes the first relay service code, and a number of transmission hops corresponding to the hop count information of the communication link between the first terminal and the associated terminal of the communication target is less than a hop count threshold (a maximum number of transmission hops allowed for a communication link between the second terminal and the associated terminal of the communication target), it is determined that the communication link exists between the first terminal and the communication target. In addition, the hop count threshold may be a preset value, or may be carried in the first message. This is not specifically limited herein. The first terminal may further determine, based on the hop count information, a number of hops corresponding to the hop count information, where the hop count information includes at least one of the following: the number of transmission hops between the first terminal and the associated terminal of the communication target; or identification information of each hop between the first terminal and the associated terminal of the communication target. For example, the communication target is a UE 3, the first terminal is a UE 1, the second terminal is a UE 2, the hop count threshold is 6, and a number of transmission hops between the UE 1 and the UE 2 is 2. If a number of transmission hops between the UE 1 and the UE 3 is 3, because 3 is less than 4 (6-2), the number of transmission hops between the first terminal and the associated terminal of the communication target is less than the hop count threshold. In addition, the UE 1 determines that a relay service code corresponding to a communication link between the UE 1 and the UE 3 includes the first relay service code. Therefore, it is determined that the communication link exists between the UE 1 and the UE 3. Alternatively, if identifiers of all hops between the UE 1 and the UE 3 are a UE 4, a UE 5, a UE 6, and a UE 7, a number of transmission hops between the UE 1 and the UE 3 is 5. Because 5 is greater than 4 (6-2), the number of transmission hops between the first terminal and the associated terminal of the communication target is greater than the hop count threshold. In this case, regardless of whether the UE 1 determines that a relay service code corresponding to a communication link between the UE 1 and the UE 3 includes the first relay service code, it is determined that no communication link exists between the UE 1 and the UE 3.

In this application, to determine that the communication link exists between the first terminal and the communication target, determining based on the link information and the first message is added. In this manner, communication signaling can be reduced, and signaling resources can be saved. In addition, when the link information includes the hop count information of the communication link between the first terminal and the associated terminal of the communication target, determining based on the hop count information and the hop count threshold is added, to reduce occurrence of a broadcast storm.

Step 403: The first terminal sends a response message of the first message to the second terminal.

Before step 403 is performed, the first terminal determines that signal quality between the first terminal and the associated terminal of the communication target is greater than a signal quality threshold, so that it can be ensured that signal quality is not poor when the second terminal establishes, by using the first terminal as a relay, a communication link to the communication target. For example, the communication target is a UE 3, the first terminal is a UE 1, and the second terminal is a UE 2. If signal quality between the UE 1 and the UE 3 is less than the signal quality threshold, it is considered that a communication link between the UE 1 and the UE 3 is unreliable (a case of a large amount of data packet loss, a large amount of noise in signal transmission, or the like may occur), and the UE 1 may not send the response message of the first message to the UE 2. Alternatively, if signal quality between the UE 1 and the UE 3 is greater than the signal quality threshold, it is considered that a communication link between the UE 1 and the UE 3 is reliable, and the UE 1 may send the response message of the first message to the UE 2. In actual application, the signal quality threshold may be flexibly set based on a service requirement of the terminal. A specific value of the signal quality threshold is not specifically limited herein. In addition, if the signal quality between the first terminal and the associated terminal of the communication target is the same as the signal quality threshold, the response message of the first message may be sent to the second terminal based on a service requirement, or the response message of the first message may not be sent to the second terminal based on a service requirement. This is not specifically limited herein.

In addition, before step 403 is performed, the first terminal determines that the number of transmission hops between the first terminal and the associated terminal of the communication target is less than the hop count threshold, so that signaling resources can be saved. For example, the communication target is a UE 3, the first terminal is a UE 1, the second terminal is a UE 2, and the hop count threshold is 6. If a number of transmission hops between the UE 1 and the UE 2 is 2, and a number of transmission hops between the UE 1 and the UE 3 is 5, because 5 is greater than 4 (6-2), the number of transmission hops between the first terminal and the associated terminal of the communication target is greater than the hop count threshold, so that the UE 1 may not send the response message of the first message to the UE 2. Alternatively, if a number of transmission hops between the UE 1 and the UE 2 is 1, and a number of transmission hops between the UE 1 and the UE 3 is 4, because 4 is less than 5 (6-1), the number of transmission hops between the first terminal and the associated terminal of the communication target is less than the hop count threshold, so that the UE 1 may send the response message of the first message to the UE 2. Alternatively, if a number of transmission hops between the UE 1 and the UE 2 is 1, and a number of transmission hops between the UE 1 and the UE 3 is 5, because 5 is equal to 5 (6-1), the number of transmission hops between the first terminal and the associated terminal of the communication target is equal to the hop count threshold, so that the UE 1 may send the response message of the first message to the UE 2 based on a service requirement, or may not send the response message of the first message to the UE 2 based on a service requirement. This is not specifically limited herein. In actual application, the hop count threshold may be flexibly set based on a service requirement of the terminal, and a specific value of the hop count threshold is not specifically limited herein.

In addition, if the first terminal determines that the signal quality between the first terminal and the associated terminal of the communication target is greater than the signal quality threshold, and the first terminal determines that the number of transmission hops between the first terminal and the associated terminal of the communication target is less than the hop count threshold, the first terminal sends the response message of the first message to the second terminal.

In this application, after receiving a discovery message for the communication target from the second terminal, if the first terminal determines that the communication link exists between the first terminal and the communication target, the first terminal directly sends the response message to the second terminal, and does not need to continue to broadcast a discovery message for the communication target. In this manner, communication signaling can be reduced, and signaling resources can be saved.

Step 404: The first terminal sends a second message used to discover the communication target, where the second message includes identification information of the first terminal.

Before performing step 404, the first terminal determines that a number of transmission hops between the second terminal and the first terminal is less than a number of transmission hops that is stored in the first terminal and that is of a third message between the first terminal and the second terminal, where the third message is used by the second terminal to discover the communication target. The third message is a discovery message transmitted in a historical time period by the second terminal for discovering the communication target. If the current number of transmission hops between the first terminal and the second terminal is less than the number of transmission hops of the third message between the first terminal and the second terminal, it is considered that there may be fewer terminals between the second terminal and the communication target. Therefore, the first terminal sends the second message used to discover the communication target, to help determine an optimal path for establishing the communication link between the second terminal and the communication target.

Step 405: The associated terminal of the communication target receives the second message, and sends a response message of the second message to the first terminal.

Step 406: The first terminal sends the response message of the second message to the second terminal.

Step 407: The second terminal selects a relay terminal based on requirements to establish the communication link to the communication target.

In addition, if no communication link exists between the first terminal and the communication target, the first terminal may store information about the communication target, for example, the identification information of the communication target, identification information of the second terminal, the hop count information of the communication link between the first terminal and the associated terminal of the communication target, and the first relay service code. In this way, after the first terminal discovers the communication target, and another terminal sends a message used to discover the communication target, the first terminal directly sends a response message to the another terminal. For example, the first terminal receives a message sent by an X^{th} terminal for discovering the communication target. Because the first terminal discovers that the communication target has been discovered by the first terminal, and the first terminal has obtained a path for establishing a communication link to the communication target, the first terminal may directly send a discovery response message for the communication target to the X^{th} terminal.

In addition, the first terminal may further store information about each hop between the second terminal and the first terminal, where the information about each hop includes at least one of the following: identification information of each hop, a number of transmission hops between each hop and the first terminal, or a relay service code corresponding to a communication link between each hop and the first terminal. For example, relays between the second terminal and the first terminal are sequentially a third terminal and a fourth terminal. In this case, identification information of each hop is identification information of the third terminal and identification information of the fourth terminal. A number of transmission hops between the third terminal and the first terminal is 2, and a number of transmission hops between the fourth terminal and the first terminal is 1. Relay service codes corresponding to a communication link between the third terminal and the first terminal are an RSC 1 and an RSC 2, and a relay service code corresponding to a communication link between the fourth terminal and the first terminal is an RSC 3. The first terminal may store information about each hop between the second terminal and the first terminal for the first terminal or the second terminal to select a path. For example, if the first terminal or the second terminal has established a link to a relay, selecting a path including the relay can reuse an existing link, thereby reducing signaling overheads.

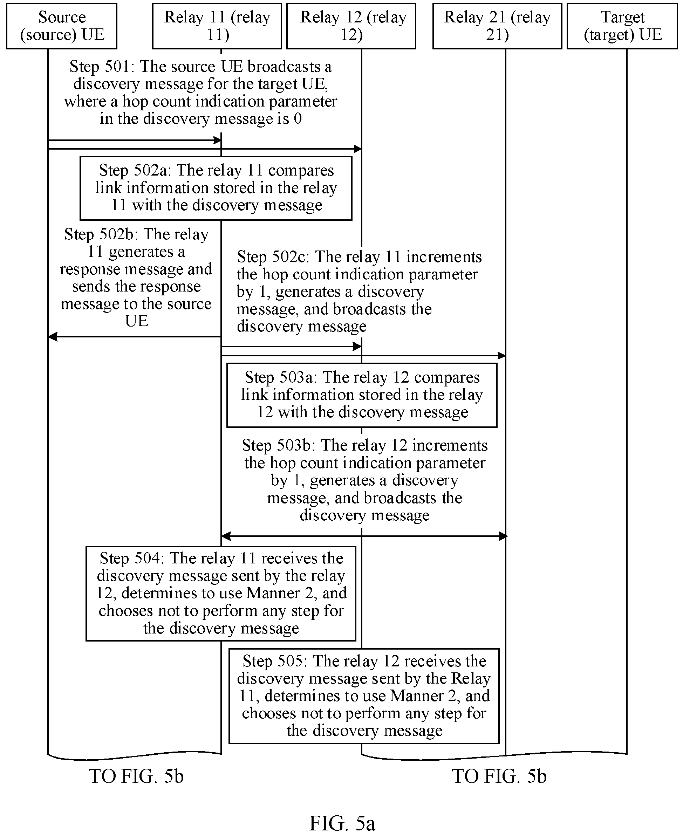

In related technologies, based on existing ProSe relay discovery technologies, a hop count indication parameter like "Hop limit (hop count limit)" is included in the discovery message to limit a maximum number of hops (namely, the foregoing hop count threshold) allowed for forwarding the discovery message. In addition, a hop count indication parameter like "relay_indication (relay indication)" is included in the discovery message. After receiving the discovery message, a relay increments the hop count indication by 1 for sending. In FIG. 5a to FIG. 6b, an example in which the hop count indication parameter is included in the discovery message is used to specifically describe solutions of this application. A source UE (namely, a second terminal), a relay 11, a relay 12, and a relay 21 (namely, first terminals), and a target UE (namely, a communication target) are used as examples for description. Information that is stored on one ProSe UE (UE 1) and that is used for a relay to discover another ProSe UE (UE 2) is referred to as link information that is on the UE 1 and that is of the UE 2, and link information is pre-stored on any UE in embodiments in FIG. 5a to FIG. 6b.

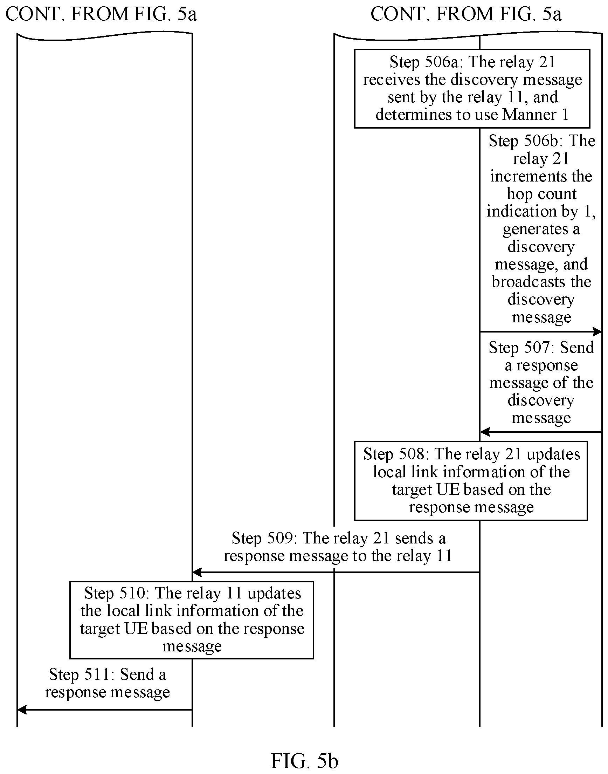

In FIG. 5a and FIG. 5b, an example in which the hop count indication parameter in the discovery message is "relay_indication" is used for description. The following is performed.

Step 501: The source UE broadcasts a discovery message for the target UE, where a hop count indication parameter in the discovery message is 0.

In addition, the discovery message further includes a user information ID of the target UE and an RSC (namely, a first relay service code) corresponding to a communication link between the source UE and the target UE.

FIG. 5a and FIG. 5b are described by using an example in which the relay 11 and the relay 12 receive the discovery message for the target UE. The relay 11 is used as an example for description. In step 502a, the relay 11 compares link information stored in the relay 11 with the discovery message. For details, refer to the following manners for understanding.

Manner 1: If link information of the target UE does not exist (that is, the "user information ID of the target UE" in the discovery message is different from "user information IDs" in the link information stored in the relay 11; the "RSC" in the discovery message is different from "RSCs" in the link information; or the "user information ID of the target UE" in the discovery message is the same as a "user information ID" in the link information stored in the relay 11, but the "RSC" in the discovery message is different from "RSCs" in the link information), step 502c is performed, and the link information of the target UE is stored locally, where the link information of the target UE includes: the user information ID of the target UE, and optionally, may further include a user information ID of the source UE, the hop count indication parameter in the discovery message, and/or the RSC corresponding to the communication link between the source UE and the target UE.

Manner 2: If link information of the target UE exists, and the hop count indication parameter in the discovery message is greater than or equal to a hop count indication parameter that is carried in a discovery message for the target UE among historical discovery messages and that is stored in the link information, the discovery message for the target UE is optionally discarded, and no subsequent step is performed. For example, the hop count indication parameter carried in the discovery message for the target UE among the historical discovery messages is 3, but the hop count indication parameter carried in the discovery message for the target UE that is currently received by the relay 11 is 4, where 4 is greater than 3. Therefore, it is considered that a path of the discovery message for the target UE that is currently sent by the source UE to the relay 11 is not an optimal path. To save signaling resources, the discovery message for the target UE is discarded, where discarding the discovery message for the target UE may be understood as not sending the discovery message for the target UE to another device.

Manner 3: If link information of the target UE exists, and the hop count indication parameter in the discovery message is less than a hop count indication parameter that is carried in a discovery message sent to the source UE and that is stored in the link information, and/or the "RSC" in the discovery message is different from an "RSC" in the link information, and/or signal quality between the relay 11 and a next hop (for example, the relay 21) to the target UE is less than a signal quality threshold, step 502c is performed, and the link information of the target UE is updated locally. Updating the link information of the target UE includes: updating the user information ID of the source UE, the hop count indication parameter in the discovery message, and/or the RSC corresponding to the communication link between the source UE and the target UE.

Manner 4: If link information of the target UE exists, and a communication link exists between the relay 11 and the target UE (that is, the "user information ID of the target UE" in the discovery message exists in "user information IDs" in the link information stored in the relay 11, and a relay service code corresponding to the communication link between the relay 11 and the target UE includes the first relay service code), step 502b is performed, and step 502c is not performed.

Manner 5: If link information of the target UE exists, a communication link exists between the relay 11 and the target UE, and the hop count indication parameter in the discovery message is less than a hop count indication parameter that is carried in a discovery message sent to the source UE and that is stored in the link information, and/or signal quality between the relay 11 and a next hop to the target UE is greater than a signal quality threshold, step 502b is performed and step 502c is not performed.

Step 502b: The relay 11 generates a response message and sends the response message to the source UE.

The response message includes a total number of hops from the source UE to the target UE (a sum of the hop count indication parameter in the received discovery message and a "number of hops to the target UE" in the link information of the target UE). Optionally, when a user information ID of each hop of relay from the next hop to the target UE and/or a number of hops from the relay 11 to the target UE are/is stored in the link information of the target UE, refer to response information in a protocol in a conventional technology. The response message further includes a discovery type, the user information ID of the source UE, the RSC, the user information ID of the target UE, and a user information ID of the relay 11.

Step 502c: The relay 11 increments the hop count indication parameter by 1, generates a discovery message, and broadcasts the discovery message, where the discovery message includes information such as the user information ID of the relay 11, the hop count indication, the user information ID of the source UE, the user information ID of the target UE, and the RSC.

Steps of "determining and recording for link information" on another relay are the same as those on the relay 11, and may be understood with reference to those on the relay 11.

Step 503a: The relay 12 compares link information stored in the relay 12 with the discovery message.

The relay 12 receives the discovery message sent by the source UE, determines that link information of the target UE does not exist and an execution condition of Manner 1 above is met, and performs step 503b (same as step 502c).

Step 503b: The relay 12 increments the hop count indication parameter by 1, generates a discovery message, and broadcasts the discovery message, where the discovery message includes information such as a user information ID of the relay 12, the hop count indication, the user information ID of the source UE, the user information ID of the target UE, and the RSC.

Step 504: The relay 11 receives the discovery message sent by the relay 12, determines to use Manner 2, and chooses not to perform any step for the discovery message.

Because the relay 11 has received the discovery message for the target UE from the source UE, a path of the discovery message for the target UE that is received from the relay 12 again is: source UE-relay 12-relay 11, whose corresponding hop count 2 is clearly greater than a hop count 1 corresponding to source UE-relay 11. Therefore, an execution condition of Manner 2 is met.

Step 505: The relay 12 receives the discovery message sent by the relay 11, determines to use Manner 2, and chooses not to perform any step for the discovery message.

Because the relay 12 has received the discovery message for the target UE from the source UE, a path of the discovery message for the target UE that is received from the relay 11 again is: source UE-relay 11-relay 12, whose corresponding hop count 2 is clearly greater than a hop count 1 corresponding to source UE-relay 12. Therefore, the execution condition of Manner 2 is met.

Step 506a: The relay 21 receives the discovery message sent by the relay 11, determines to use Manner 1, and performs step 506b (same as step 502c).

Step 506b: The relay 21 increments the hop count indication by 1, generates a discovery message, and broadcasts the discovery message, where the discovery message includes information such as a user information ID of the relay 21, the hop count indication, the user information ID of the source UE, the user information ID of the target UE, and the RSC.

Step 507: The target UE receives the discovery message sent by the relay 21, and sends a response message of the discovery message to the relay 21, where the response message includes: a discovery message type, the user information ID of the source UE, the RSC, the user information ID of the target UE, a user information ID of a previous hop or user information IDs of relays on an entire path (a path for establishing a communication link between the source UE and the target UE), and a total number of hops of the entire path from the source UE to the target UE.

Step 508: The relay 21 updates local link information of the target UE based on the response message, where the link information includes: a user information ID of a previous hop to the target UE or the user information IDs of all the relays to the target UE, and/or a number of hops to the target UE (namely, a difference between the total number of hops in the response message and the hop count indication that is stored in the link information of the target UE and that is in the sent discovery message), and/or the RSC.

Step 509: The relay 21 sends a response message to the previous hop (the relay 11).

Step 510: The relay 11 updates the local link information of the target UE based on the response message. This is the same as step 508.

Step 511: The relay 11 sends a response message to a previous hop (the source UE).

In this application, a relay that already has a communication link to the target UE directly sends a response message to the source UE, so that signaling resources can be saved. In addition, the relay stores and updates link information of the target UE, so that a broadcast storm can be avoided.

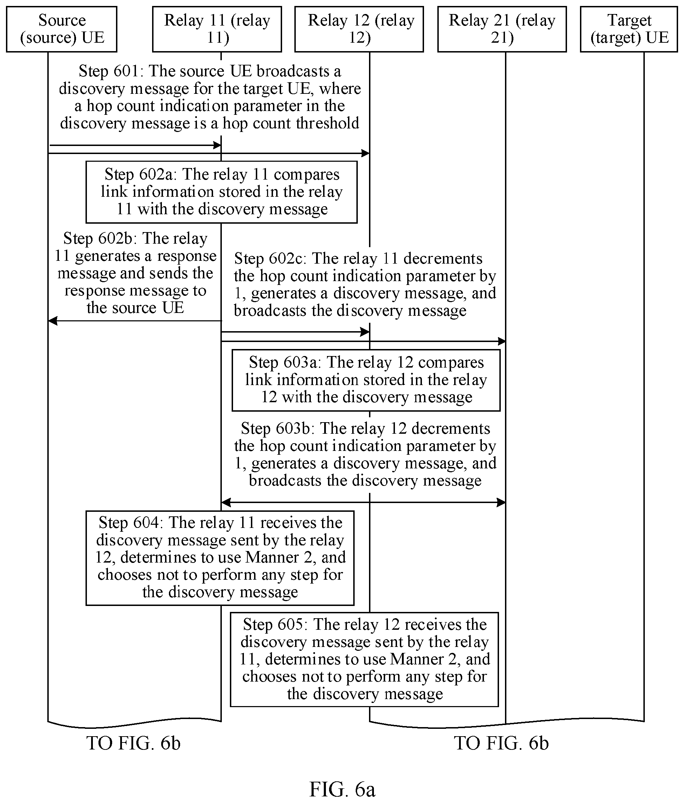

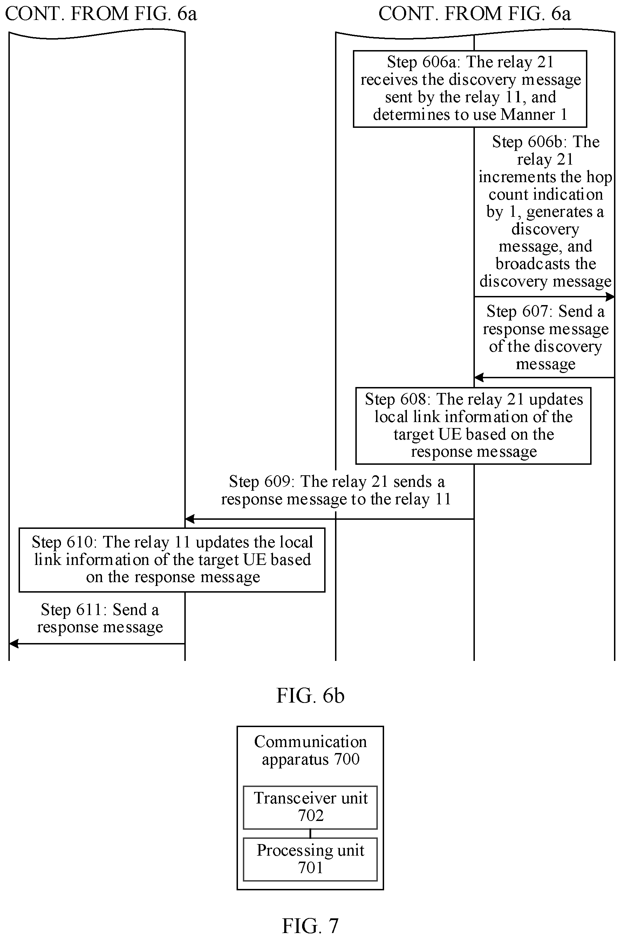

In FIG. 6a and FIG. 6b, an example in which a hop count indication parameter in a discovery message is a "Hop limit" is used for description. The following is performed.

Step 601: The source UE broadcasts a discovery message for the target UE, where a hop count indication parameter in the discovery message is a hop count threshold.

In addition, the discovery message further includes a user information ID of the target UE and an RSC (namely, a first relay service code) corresponding to a communication link between the source UE and the target UE.

FIG. 6a and FIG. 6b are described by using an example in which the relay 11 and the relay 12 receive the discovery message for the target UE. The relay 11 is used as an example for description. In step 602a, the relay 11 compares link information stored in the relay 11 with the discovery message. For details, refer to the following manners for understanding.

Manner 1: If link information of the target UE does not exist (that is, the "user information ID of the target UE" in the discovery message is different from "user information IDs" in the link information stored in the relay 11; the "RSC" in the discovery message is different from "RSCs" in the link information; or the "user information ID of the target UE" in the discovery message is the same as a "user information ID" in the link information stored in the relay 11, but the "RSC" in the discovery message is different from "RSCs" in the link information), step 602c is performed, and the link information of the target UE is stored locally, where the link information of the target UE includes: the user information ID of the target UE, and optionally, may further include a user information ID of the source UE, the hop count indication parameter in the discovery message, and/or the RSC corresponding to the communication link between the source UE and the target UE.

Manner 2: If link information of the target UE exists, and the hop count indication parameter in the discovery message is less than or equal to a hop count indication parameter that is carried in a discovery message for the target UE among historical discovery messages and that is stored in the link information, the discovery message for the target UE is optionally discarded, and no subsequent step is performed. For example, the hop count indication parameter carried in the discovery message for the target UE among the historical discovery messages is 3, but the hop count indication parameter carried in the discovery message for the target UE that is currently received by the relay 11 is 4, where 3 is less than 4. Therefore, it is considered that a path of the discovery message for the target UE that is currently sent by the source UE to the relay 11 is not an optimal path. To save signaling resources, the discovery message for the target UE is discarded, where discarding the discovery message for the target UE may be understood as not sending the discovery message for the target UE to another device.

Manner 3: If link information of the target UE exists, and the hop count indication parameter in the discovery message is greater than a hop count indication parameter that is carried in a discovery message sent to the source UE and that is stored in the link information, and/or the "RSC" in the discovery message is different from an "RSC" in the link information, and/or signal quality between the relay 11 and a next hop (for example, the relay 21) to the target UE is less than a signal quality threshold, step 602c is performed, and the link information of the target UE is updated locally. Updating the link information of the target UE includes: updating the user information ID of the source UE, the hop count indication parameter in the discovery message, and/or the RSC corresponding to the communication link between the source UE and the target UE.

Manner 4: If link information of the target UE exists, and a communication link exists between the relay 11 and the target UE (that is, the "user information ID of the target UE" in the discovery message exists in "user information IDs" in the link information stored in the relay 11, and a relay service code corresponding to the communication link between the relay 11 and the target UE includes the first relay service code), step 602b is performed, and step 602c is not performed.

Manner 5: If link information of the target UE exists, a communication link exists between the relay 11 and the target UE, and the hop count indication parameter in the discovery message is greater than a hop count indication parameter that is carried in a discovery message sent to the source UE and that is stored in the link information, and/or signal quality between the relay 11 and a next hop to the target UE is greater than a signal quality threshold, step 602b is performed and step 602c is not performed.

Step 602b: The relay 11 generates a response message and sends the response message to the source UE.

The response message includes a total number of hops from the source UE to the target UE (a sum of the hop count indication parameter in the received discovery message and a "number of hops to the target UE" in the link information of the target UE). Optionally, when a user information ID of each hop of relay from the next hop to the target UE and/or a number of hops from the relay 11 to the target UE are/is stored in the link information of the target UE, refer to response information in a protocol in a conventional technology. The response message further includes a discovery type, the user information ID of the source UE, the RSC, the user information ID of the target UE, and a user information ID of the relay 11.

Step 602c: The relay 11 decrements the hop count indication parameter by 1, generates a discovery message, and broadcasts the discovery message, where the discovery message includes information such as the user information ID of the relay 11, the hop count indication, the user information ID of the source UE, the user information ID of the target UE, and the RSC.

Steps of "determining and recording for link information" on another relay are the same as those on the relay 11, and may be understood with reference to those on the relay 11.

Step 603a: The relay 12 compares link information stored in the relay 12 with the discovery message.

The relay 12 receives the discovery message sent by the source UE, determines that link information of the target UE does not exist and an execution condition of Manner 1 above is met, and performs step 603b (same as step 602c).

Step 603b: The relay 12 decrements the hop count indication parameter by 1, generates a discovery message, and broadcasts the discovery message, where the discovery message includes information such as the user information ID of the relay 12, the hop count indication, the user information ID of the source UE, the user information ID of the target UE, and the RSC.

Step 604: The relay 11 receives the discovery message sent by the relay 12, determines to use Manner 2, and chooses not to perform any step for the discovery message.

Because the relay 11 has received the discovery message for the target UE from the source UE, a path of the discovery message for the target UE that is received from the relay 12 again is: source UE-relay 12-relay 11, corresponding to a hop count 2, while source UE-relay 11 corresponds to a hop count 1. Hop count threshold - 2 is clearly less than Hop count threshold - 1. Therefore, an execution condition of Manner 2 is met.

Step 605: The relay 12 receives the discovery message sent by the relay 11, determines to use Manner 2, and chooses not to perform any step for the discovery message.

Because the relay 12 has received the discovery message for the target UE from the source UE, a path of the discovery message for the target UE that is received from the relay 11 again is: source UE-relay 11-relay 12, corresponding to a hop count 2, while source UE-relay 12 corresponds to a hop count 1. Hop count threshold - 2 is clearly less than Hop count threshold - 1. Therefore, the execution condition of Manner 2 is met.

Step 606a: The relay 21 receives the discovery message sent by the relay 11, determines to use Manner 1, and performs step 606b (same as step 602c).

Step 606b: The relay 21 increments the hop count indication by 1, generates a discovery message, and broadcasts the discovery message, where the discovery message includes information such as a user information ID of the relay 21, the hop count indication, the user information ID of the source UE, the user information ID of the target UE, and the RSC.

Step 607: The target UE receives the discovery message sent by the relay 21, and sends a response message of the discovery message to the relay 21, where the response message includes: a discovery message type, the user information ID of the source UE, the RSC, the user information ID of the target UE, a user information ID of a previous hop or user information IDs of relays on an entire path (a path for establishing a communication link between the source UE and the target UE), and a total number of hops of the entire path from the source UE to the target UE.

Step 608: The relay 21 updates local link information of the target UE based on the response message, where the link information includes: a user information ID of a previous hop to the target UE or the user information IDs of all the relays to the target UE, and/or a number of hops to the target UE (namely, a difference between the total number of hops in the response message and the hop count indication that is stored in the link information of the target UE and that is in the sent discovery message), and/or the RSC.

Step 609: The relay 21 sends a response message to the previous hop (the relay 11).

Step 610: The relay 11 updates the local link information of the target UE based on the response message. This is the same as step 608. In addition, the relay 11 may further store the user information ID of the relay 21.

Step 611: The relay 11 sends a response message to a previous hop (the source UE).

In this application, a relay that already has a communication link to the target UE directly sends a response message to the source UE, so that signaling resources can be saved. In addition, the relay stores and updates link information of the target UE, so that a broadcast storm can be avoided.

In actual application, when the communication target is a target network, the user information ID of the target UE in the discovery message above may be replaced with target Info (corresponding to a user information ID of a relay that can access a network). For example, the communication target of the source UE is a network 1, the discovery message may carry an identifier of the network 1, and the network 1 is accessed by discovering the relay that has accessed the network 1. In this case, link information stored in the relay may further include information about whether the relay has accessed the network 1 and information about whether at least one terminal that has a communication link to the relay has accessed the network 1. That link information of the target UE does not exist in Manner 1 in FIG. 5a to FIG. 6b may be understood as that: the "user information IDs" in the link information stored in the relay 11 cannot access the network, and the relay 11 cannot access the network, or the "RSC" in the discovery message is different from the "RSCs" in the link information; the "user information ID" in the link information stored in the relay 11 can access the network, and the relay 11 cannot access the network, but the "RSC" in the discovery message is different from the "RSCs" in the link information; or the "user information ID" in the link information stored in the relay 11 cannot access the network, and the relay 11 can access the network, but the "RSC" in the discovery message is different from an RSC corresponding to a communication link between the source UE and the relay 11. For Manner 2 to Manner 5 in FIG. 5a to FIG. 6b, refer to the foregoing descriptions for understanding, and details are not described herein again.

In addition, when the communication target is a target network, the discovery message above may not include the user information ID of the target UE by default. This is not specifically limited in this application.

The foregoing mainly describes the solutions provided in embodiments of this application from a perspective of device interaction. It may be understood that, to implement the foregoing functions, each device may include a corresponding hardware structure and/or software module for performing each function. A person skilled in the art should be easily aware that, in combination with units and algorithm steps of the examples described in embodiments disclosed in this specification, embodiments of this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the device may be divided into functional units based on the foregoing method examples. For example, each functional unit may be obtained through division based on a corresponding function, or two or more functions may be integrated into one unit. The integrated unit may be implemented in a form of hardware, or may be implemented in a form of a software functional unit.

When an integrated unit is used, FIG. 7 is a possible example block diagram of a communication apparatus according to an embodiment of this application. As shown in FIG. 7, the communication apparatus 700 may include a processing unit 701 and a transceiver unit 702. The processing unit 701 is configured to: control and manage an action of the communication apparatus 700. The transceiver unit 702 is configured to support communication between the communication apparatus 700 and another device. Optionally, the transceiver unit 702 may include a receiving unit and/or a sending unit that are respectively configured to perform a receiving operation and a sending operation. Optionally, the communication apparatus 700 may further include a storage unit, configured to store program code and/or data of the communication apparatus 700. The transceiver unit may be referred to as an input/output unit, a communication unit, or the like, and the transceiver unit may be a transceiver. The processing unit may be a processor. When the communication apparatus is a module (for example, a chip) in a communication device, the transceiver unit may be an input/output interface, an input/output circuit, an input/output pin, or the like, and may also be referred to as an interface, a communication interface, an interface circuit, or the like; and the processing unit may be a processor, a processing circuit, a logic circuit, or the like. Specifically, the apparatus may be the first terminal, the second terminal, the associated terminal of the communication target, or the like.

In an embodiment, the communication apparatus 700 is the first terminal. The transceiver unit 702 is configured to receive, from a second terminal, a first message used to discover a communication target. The processing unit 701 is configured to send a response message of the first message to the second terminal if a communication link exists between the first terminal and the communication target. In this manner, the response message indicating that the communication target is discovered is directly fed back to the second terminal, so that communication signaling can be reduced, and signaling resources can be saved.

To determine whether a communication link exists between the first terminal and the communication target, determining based on the link information and the first message is added, to avoid broadcasting a discovery message for the communication target. In this manner, communication signaling can be reduced, and signaling resources can be saved. The processing unit 701 is further configured to determine, based on link information of the first terminal and the first message, that the communication link exists between the first terminal and the communication target.

In an optional implementation, the first message includes identification information of the communication target and a first relay service code; and the link information includes identification information of at least one terminal that has a communication link to the first terminal, and a relay service code corresponding to the communication link between the first terminal and the at least one terminal.

In an optional implementation, the processing unit 701 is configured to determine, if the at least one terminal includes an associated terminal of the communication target, and a relay service code corresponding to a communication link between the first terminal and the associated terminal of the communication target includes the first relay service code, that the communication link exists between the first terminal and the communication target.

In an optional implementation, the processing unit 701 is configured to send, through the transceiver unit 702 if no communication link exists between the first terminal and the communication target, a second message used to discover the communication target, where the second message includes identification information of the first terminal.

In an optional implementation, if the following first condition is met, the processing unit 701 determines that no communication link exists between the first terminal and the communication target, where the first condition includes at least one of the following: the at least one terminal that has the communication link to the first terminal does not include the associated terminal of the communication target; or the relay service code corresponding to the communication link between the first terminal and the at least one terminal does not include the first relay service code.

In an optional implementation, to ensure that a path of a communication link established between the second terminal and the communication target is an optimal path, the processing unit 701 is further configured to determine that a number of transmission hops between the second terminal and the first terminal is less than a number of transmission hops that is stored in the first terminal and that is of a third message between the first terminal and the second terminal, where the third message is used by the second terminal to discover the communication target.

In an optional implementation, to ensure signal quality of the communication link established between the second terminal and the communication target, and to ensure that a service requirement of the second terminal is met and signaling resources are saved, the processing unit 701 is further configured to: determine that signal quality between the first terminal and the associated terminal of the communication target is greater than a signal quality threshold; and/or determine that a number of transmission hops between the first terminal and the associated terminal of the communication target is less than a hop count threshold.

In an optional implementation, the first message includes the hop count threshold.

In an optional implementation, the link information further includes: hop count information of a communication link between the first terminal and an associated terminal of the communication target; and the processing unit 701 is specifically configured to determine, if the at least one terminal includes the associated terminal of the communication target, a relay service code corresponding to the communication link between the first terminal and the associated terminal of the communication target includes the first relay service code, and a number of transmission hops corresponding to the hop count information of the communication link between the first terminal and the associated terminal of the communication target is less than a hop count threshold, that the communication link exists between the first terminal and the communication target.

In an optional implementation, the processing unit 701 is further configured to determine, based on the hop count information, the number of transmission hops corresponding to the hop count information.

In an optional implementation, the hop count information includes at least one of the following: the number of transmission hops between the first terminal and the associated terminal of the communication target; or identification information of each hop between the first terminal and the associated terminal of the communication target.

In an optional implementation, the processing unit 701 is further configured to store information about the communication target, where the information about the communication target includes the identification information of the communication target.

In an optional implementation, the information about the communication target further includes at least one of the following: identification information of the second terminal, hop count information of the communication link between the first terminal and the associated terminal of the communication target, and the first relay service code.

In an optional implementation, the processing unit 701 is further configured to store information about each hop between the second terminal and the first terminal, where the information about each hop includes at least one of the following: identification information of each hop, a number of transmission hops between each hop and the first terminal, or a relay service code corresponding to a communication link between each hop and the first terminal.

In an optional implementation, when the communication target is a target terminal, the associated terminal of the communication target is the target terminal (which may be understood as that the associated terminal of the communication target may be replaced with the target terminal herein); or when the communication target is a target network, the associated terminal of the communication target is a terminal that has a communication link to the target network.

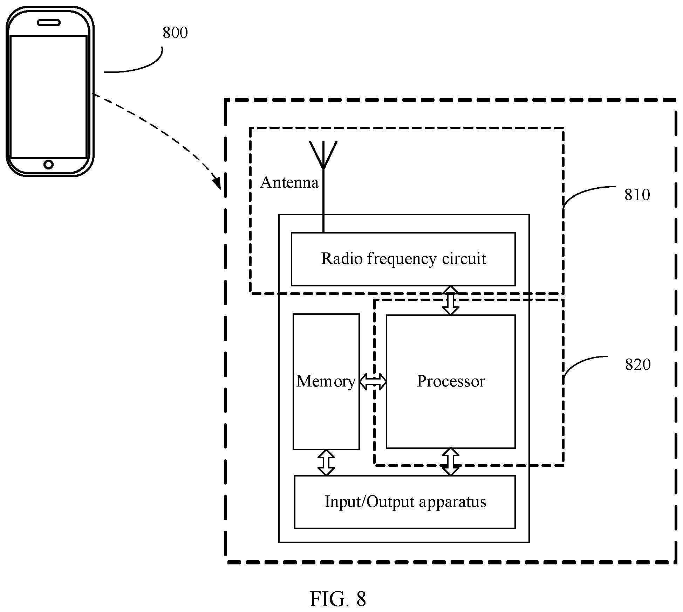

In addition, FIG. 8 is a diagram of a structure of a simplified terminal device according to this application. For ease of understanding and figure illustration, an example in which the terminal device is a mobile phone is used in FIG. 8. As shown in FIG. 8, the terminal device includes a processor, a memory, a radio frequency circuit, an antenna, and an input/output apparatus.

The processor is mainly configured to: process a communication protocol and communication data, control the terminal device, execute a software program, process data of the software program, and the like.

The memory is mainly configured to store the software program and the data.

The radio frequency circuit is mainly configured to: perform conversion between a baseband signal and a radio frequency signal, and process the radio frequency signal.

The antenna is mainly configured to receive/send a radio frequency signal in a form of an electromagnetic wave.

The input/output apparatus, for example, a touchscreen, a display, or a keyboard, is mainly configured to: receive data input by a user and output data to the user.

It should be noted that some types of terminal devices may have no input/output apparatus.

When needing to send data, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data.

For ease of description, FIG. 8 shows only one memory and one processor. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have sending and receiving functions may be considered as a transceiver unit of the terminal device, and the processor that has a processing function may be considered as a processing unit of the terminal device.

As shown in FIG. 8, the terminal device 800 includes the transceiver unit 810 and the processing unit 820. The transceiver unit 810 may also be referred to as a transceiver, a transceiver machine, a transceiver apparatus, or the like. The processing unit 820 may also be referred to as a processor, a processing board, a processing module, a processing apparatus, or the like.

Optionally, a component that is in the transceiver unit 810 and that is configured to implement a receiving function may be considered as a receiving unit, and a component that is in the transceiver unit 810 and that is configured to implement a sending function may be considered as a sending unit. In other words, the transceiver unit 810 includes the receiving unit and the sending unit. The transceiver unit may also be sometimes referred to as a transceiver machine, a transceiver, a transceiver circuit, or the like. The receiving unit may also be sometimes referred to as a receiver machine, a receiver, a receiver circuit, or the like. The sending unit may also be sometimes referred to as a transmitter machine, a transmitter, a transmitter circuit, or the like.

It should be understood that the transceiver unit 810 is configured to perform a sending operation and a receiving operation of the terminal device in the foregoing method embodiments, and the processing unit 820 is configured to perform an operation other than the sending operation and the receiving operation of the terminal device in the foregoing method embodiments.

When the terminal device is a chip, the chip includes the transceiver unit 810 and the processing unit 820. The transceiver unit 810 may be an input/output circuit or a communication interface. The processing unit 820 is a processor, a microprocessor, an integrated circuit, or a logic circuit integrated on the chip.

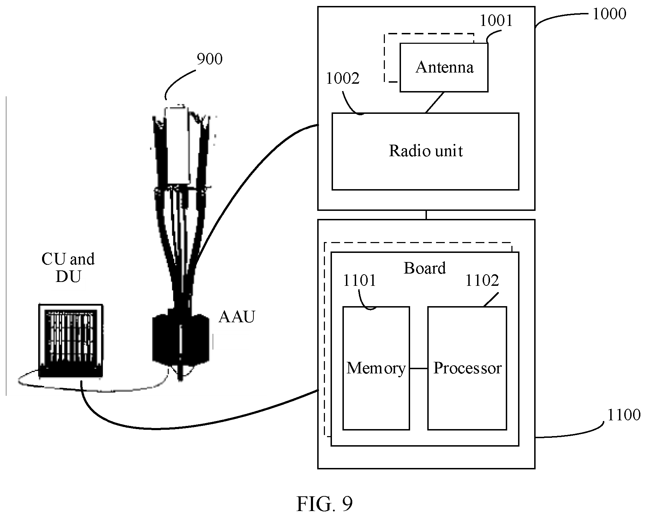

This application further provides a network device. FIG. 9 is a diagram of a structure of a network device 900 according to an embodiment of this application. The network device 900 may be used in the system shown in FIG. 1a to FIG. 1e. For example, the network device 900 may be the network device in the system shown in FIG. 1a to FIG. 1e, and is configured to perform the functions of the network device in the foregoing method embodiments. It should be understood that the following is merely an example. In a future communication system, the network device may have another form and composition.

For example, in a 5G communication system, the network device 900 may include a CU, a DU, and an AAU, which is different from a network device that is in an LTE communication system and that includes one or more radio units, for example, a remote radio unit (remote radio unit, RRU) and one or more building baseband processing units (building baseband unit, BBU).

A non-real-time part of the original BBU is split off and redefined as the CU, which is responsible for processing a non-real-time protocol and service, some physical layer processing functions of the BBU are combined with the original RRU and a passive antenna into the AAU, and remaining functions of the BBU are redefined as the DU, which is responsible for processing a physical layer protocol and a real-time service. In short, the CU and the DU are distinguished based on real-time performance of processed content, and the AAU is a combination of the RRU and the antenna.

The CU, the DU, and the AAU may be deployed separately or together. Therefore, there may be a plurality of network deployment forms. A possible deployment form, as shown in FIG. 9, is consistent with that of a conventional 4G network device. The CU and the DU are deployed on same hardware. It should be understood that FIG. 9 is merely an example, and constitutes no limitation on the protection scope of this application. For example, a deployment form may alternatively be that the DUs are deployed in a BBU equipment room, CUs or DUs are deployed together, or CUs are centralized at a higher level.

The AAU 1000 can implement a transceiver function, and corresponds to the transceiver unit 702 in FIG. 7. Optionally, the AAU 1000 may also be referred to as a transceiver machine, a transceiver circuit, a transceiver, or the like, and may include at least one antenna 1001 and a radio unit 1002. Optionally, the AAU 1000 may include a receiving unit and a sending unit. The receiving unit may correspond to a receiver (or referred to as a receiver machine or a receiver circuit), and the sending unit may correspond to a transmitter (or referred to as a transmitter machine or a transmitter circuit). The CU and DU 1100 can implement an internal processing function, and corresponds to the processing unit 701 in FIG. 7. Optionally, the CU and DU 1100 may control the network device or the like, and may be referred to as a controller. The AAU and the CU and DU may be physically disposed together, or may be physically disposed separately.

In addition, the network device is not limited to the form shown in FIG. 9, and may alternatively be in another form, for example, including a BBU and an adaptive radio unit (adaptive radio unit, ARU), or including a BBU and an AAU, may be a customer premises equipment (customer premises equipment, CPE), or may be in another form. This is not limited in this application.

In an example, the CU and DU 1100 may include one or more boards. A plurality of boards may jointly support a radio access network (for example, an LTE network) of a single access mode, or may respectively support radio access networks (for example, LTE networks, 5G networks, future networks, or other networks) of different access modes. The CU and DU 1100 further include a memory 1101 and a processor 1102. The memory 1101 is configured to store necessary instructions and data. The processor 1102 is configured to control the network device to perform a necessary action, for example, is configured to control the network device to perform an operation procedure related to the network device in the foregoing method embodiments. The memory 1101 and the processor 1102 may serve one or more boards. In other words, a memory and a processor may be disposed on each board. Alternatively, a plurality of boards may share a same memory and a same processor. In addition, a necessary circuit may be further disposed on each board.

It should be understood that the network device 900 shown in FIG. 9 can implement the functions of the network device in the method embodiments. Operations and/or functions of units in the network device 900 are separately for implementing corresponding procedures performed by the network device in the method embodiments of this application. To avoid repetition, detailed descriptions are appropriately omitted herein. The structure of the network device shown in FIG. 9 is merely a possible form, and should not constitute any limitation on embodiments of this application. In this application, a possibility that there may be a network device structure in another form in the future is not excluded.

The CU and DU 1100 may be configured to perform an action that is described in the foregoing method embodiments and that is implemented inside the network device, and the AAU 1000 may be configured to perform an action of sending from the network device to the terminal device and an action of receiving from the terminal device in the foregoing method embodiments. For details, refer to the descriptions in the foregoing method embodiments. Details are not described herein again.

An embodiment of this application further provides a communication system. The communication system includes a terminal device and a network device. The terminal device is configured to perform all or a part of the steps performed by the terminal device in the embodiment shown in FIG. 5a and FIG. 5b. The network device is configured to perform all or a part of the steps performed by the network device in the embodiment shown in FIG. 5a and FIG. 5b.

Based on the foregoing embodiments, an embodiment of this application further provides a readable storage medium. The readable storage medium stores instructions. When the instructions are executed, the method in any one of the foregoing embodiments is implemented. The readable storage medium may include any medium that can store program code, such as a USB flash drive, a removable hard disk, a read-only memory, a random access memory, a magnetic disk, or an optical disc.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may be implemented in a form of a computer program product that is implemented on one or more computer-usable storage media (including but not limited to a magnetic disk memory, a compact disc read-only memory (compact disc read-only memory, CD-ROM), an optical memory, and the like) that include computer-usable program code.

This application is described with reference to the flowcharts and/or block diagrams of the method, the apparatus (system), and the computer program product according to this application. It should be understood that computer program instructions may be used to implement each process and/or each block in the flowcharts and/or the block diagrams and a combination of a process and/or a block in the flowcharts and/or the block diagrams. The computer program instructions may be provided for a general-purpose computer, a dedicated computer, an embedded processor, or a processor of any other programmable data processing apparatus to generate a machine, so that the instructions executed by a computer or a processor of any other programmable data processing apparatus generate an apparatus for implementing a specific function in one or more processes in the flowcharts and/or in one or more blocks in the block diagrams.

The computer program instructions may be stored in a computer-readable memory that can indicate the computer or any other programmable data processing apparatus to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto a computer or another programmable data processing apparatus, so that a series of operation steps are performed on the computer or another programmable apparatus to generate computer-implemented processing. Therefore, the instructions executed on the computer or another programmable apparatus provide steps for implementing a specific function in one or more procedures in the flowcharts and/or in one or more blocks in the block diagrams.

## Claims

1. A communication method, applied to a first terminal and comprising:
receiving, from a second terminal, a first message used to discover a communication target; and
sending a response message of the first message to the second terminal if a communication link exists between the first terminal and the communication target.

2. The method according to claim 1, further comprising:
determining, based on link information of the first terminal and the first message, that the communication link exists between the first terminal and the communication target.

3. The method according to claim 2, wherein the first message comprises identification information of the communication target and a first relay service code; and
the link information comprises identification information of at least one terminal that has a communication link to the first terminal, and a relay service code corresponding to the communication link between the first terminal and the at least one terminal.

4. The method according to claim 3, wherein the determining, based on the link information of the first terminal and the first message, that the communication link exists between the first terminal and the communication target comprises:
determining, if the at least one terminal comprises an associated terminal of the communication target, and a relay service code corresponding to a communication link between the first terminal and the associated terminal of the communication target comprises the first relay service code, that the communication link exists between the first terminal and the communication target.

5. The method according to any one of claims 1 to 4, further comprising:
sending, if no communication link exists between the first terminal and the communication target, a second message used to discover the communication target, wherein the second message comprises identification information of the first terminal.

6. The method according to claim 5, further comprising:
determining, if the following first condition is met, that no communication link exists between the first terminal and the communication target, wherein
the first condition comprises at least one of the following:
the at least one terminal that has the communication link to the first terminal does not comprise the associated terminal of the communication target; or
the relay service code corresponding to the communication link between the first terminal and the at least one terminal does not comprise the first relay service code.

7. The method according to claim 5 or 6, wherein before the sending the second message used to discover the communication target, the method further comprises:
determining that a number of transmission hops between the second terminal and the first terminal is less than a number of transmission hops that is stored in the first terminal and that is of a third message between the first terminal and the second terminal, wherein the third message is used by the second terminal to discover the communication target.

8. The method according to any one of claims 1 to 7, wherein before the sending the response message of the first message to the second terminal, the method further comprises:
determining that signal quality between the first terminal and the associated terminal of the communication target is greater than a signal quality threshold; and/or
determining that a number of transmission hops between the first terminal and the associated terminal of the communication target is less than a hop count threshold.

9. The method according to claim 8, wherein the first message comprises the hop count threshold.

10. The method according to claim 3, wherein the link information further comprises: hop count information of a communication link between the first terminal and an associated terminal of the communication target; and
the determining, based on the link information of the first terminal and the first message, that the communication link exists between the first terminal and the communication target comprises:
determining, if the at least one terminal comprises the associated terminal of the communication target, a relay service code corresponding to the communication link between the first terminal and the associated terminal of the communication target comprises the first relay service code, and a number of transmission hops corresponding to the hop count information of the communication link between the first terminal and the associated terminal of the communication target is less than a hop count threshold, that the communication link exists between the first terminal and the communication target.

11. The method according to claim 10, further comprising:
determining, based on the hop count information, the number of transmission hops corresponding to the hop count information.

12. The method according to claim 10 or 11, wherein the hop count information comprises at least one of the following:
the number of transmission hops between the first terminal and the associated terminal of the communication target; or
identification information of each hop between the first terminal and the associated terminal of the communication target.

13. The method according to any one of claims 5 to 7, wherein the method further comprises:
storing information about the communication target, wherein the information about the communication target comprises the identification information of the communication target.

14. The method according to claim 13, wherein the information about the communication target further comprises at least one of the following:
identification information of the second terminal, hop count information of the communication link between the first terminal and the associated terminal of the communication target, and the first relay service code.

15. The method according to any one of claims 5 to 7, 13, or 14, further comprising:
storing information about each hop between the second terminal and the first terminal, wherein the information about each hop comprises at least one of the following: identification information of each hop, a number of transmission hops between each hop and the first terminal, or a relay service code corresponding to a communication link between each hop and the first terminal.

16. The method according to any one of claims 1 to 15, wherein when the communication target is a target terminal, the associated terminal of the communication target is the target terminal; or when the communication target is a target network, the associated terminal of the communication target is a terminal that has a communication link to the target network.

17. The method according to any one of claims 1 to 16, wherein the response message of the first message comprises first path information, and the first path information comprises identification information of each hop between the second terminal and the communication target.

18. A communication apparatus, comprising a functional module that implements the method according to any one of claims 1 to 17.

19. A communication apparatus, comprising at least one processor and a memory, wherein
the memory is configured to store a computer program or instructions; and
the at least one processor is configured to execute the computer program or the instructions, to cause the method according to any one of claims 1 to 17 to be performed.

20. A chip system, wherein the chip system comprises a processing circuit, and the processing circuit is coupled to a storage medium; and
the processing circuit is configured to: execute a part or all of computer programs or instructions in the storage medium, and implement the method according to any one of claims 1 to 17 when the part or all of the computer programs or the instructions are executed.

21. A computer-readable storage medium, wherein the computer-readable storage medium stores instructions, and when the instructions are executed by a computer, the method according to any one of claims 1 to 17 is performed.

22. A computer program product comprising a computer program or instructions, wherein when the computer program product runs on a computer, the method according to any one of claims 1 to 17 is performed.
